# EUROPEAN PATENT APPLICATION

(11) **EP 4 471 429 A1**
(43) Date of publication of application: **04.12.2024**
(21) Application number: 24178771.2
(22) Date of filing: 29.05.2024
(51) Int. Cl.: G01N 35/00, G02B 21/34, G02B 21/26, G02B 21/36, G06T 3/4038, G06V 20/69

(54) **APPARATUS FOR IMAGING BIOLOGICAL SAMPLE**

(30) Priority: 30.05.2023 GB 202308042
(71) Applicant: Oxford Immune Algorithmics Ltd., Reading RG1 3EU (GB)
(72) Inventor: ZENIL, Hector, Reading, RG1 3EU (GB)
(74) Representative: Ribeiro, James Michael

(57) **Abstract**

Apparatus for imaging a biological sample, the apparatus comprising: a cartridge comprising a machine-readable mark, and a sample region configured to receive a biological sample; and a device configured to receive the cartridge, the device comprising a camera configured to read the cartridge by imaging the machine-readable mark and imaging the sample region, wherein the cartridge can be removed from the device after it has been read by the camera.

## Description

### FIELD OF THE INVENTION

The present invention relates to apparatus for imaging a biological sample, a method of imaging a biological sample, a cartridge, and a circular wafer.

### BACKGROUND OF THE INVENTION

Conventional systems and methods for biological imaging typically require a microscopic set up with biological samples loaded onto a cartridge that is subsequently imaged. The quality of the cartridge affects the imaging and subsequent analysis of the biological sample. For example, using lower-quality cartridges may result in the biological sample being more difficult to image, leading to inaccurate analysis of the biological sample. Similarly, there is a risk of cross-contamination if a cartridge is used to image different biological samples. There is also a risk of misidentification if cartridges carrying different biological samples from different patients are switched.

### SUMMARY OF THE INVENTION

According to a first aspect of the invention, apparatus for imaging a biological sample is provided, the apparatus comprising a cartridge comprising a machine-readable mark, and a sample region configured to receive a biological sample; and a device configured to receive the cartridge, the device comprising a camera configured to read the cartridge by imaging the machine-readable mark and imaging the sample region, wherein the cartridge can be removed from the device after it has been read by the camera.

Optionally the device only has a single camera.

Optionally the camera has a field of view which can only cover part of the sample region or part of the machine-readable mark.

Optionally the device is arranged to move the cartridge relative to the camera (or vice versa) to enable the camera to obtain multiple images of the sample region (each image containing a different part of the sample region) and multiple images of the machine-readable mark (each image containing a different part of the machine-readable mark).

Optionally, the device further comprises a computer system configured to analyse an image of the machine-readable mark from the camera to obtain an authentication code, and further configured to verify the cartridge by an analysis of the authentication code.

Optionally, the device further comprises a processor configured to analyse an image of the sample region from the camera, for instance to classify image features.

Optionally, the device further comprises a processor configured to compile the multiple images of the sample region to obtain a composite image of the biological sample.

A further aspect of the invention provides a method of imaging a biological sample, the method comprising: loading a biological sample onto or into a sample region of a cartridge; loading the cartridge onto or into a device; moving the cartridge relative to the camera of the device (or vice versa) to enable the camera to obtain multiple images of the sample region and multiple images of the machine-readable mark, each image of the machine-readable mark containing only part of the machine-readable mark and each image of the biological sample containing only part of the biological sample; and removing the cartridge from the device.

Optionally, the method further comprises compiling the multiple images of the machine-readable mark to read the machine-readable mark.

Optionally, the method further comprises compiling the multiple images of the machine-readable mark to read the machine-readable mark and obtain an authentication code.

Optionally, the method further comprises compiling the multiple images of the sample region to obtain a composite image of all or part of the biological sample.

The movement of the cartridge (and/or the camera) may be performed manually, or by an actuation system of the device.

Optionally the method further comprises analysing the images of the sample region, for example to automatically classify image features.

A further aspect of the invention provides apparatus for imaging a biological sample, the apparatus comprising: a cartridge comprising a machine-readable mark, and a sample region configured to receive a biological sample; and a device configured to receive the cartridge, the device comprising a camera configured to read the cartridge by imaging the machine-readable mark and imaging the sample region, wherein the cartridge can be removed from the device after it has been read by the camera, the device further comprising a computer system configured to analyse an image of the machine-readable mark from the camera to obtain an authentication code, and further configured to verify the cartridge by an analysis of the authentication code.

A further aspect of the invention provides a method of imaging a biological sample, the method comprising loading a biological sample onto or into a sample region of a cartridge, the cartridge comprising a machine-readable mark; loading the cartridge onto or into a device, the device comprising a camera; generating an image of the machine-readable mark with the camera; analysing the image of the machine-readable mark to obtain an authentication code, verifying the cartridge by an analysis of the authentication code; imaging the biological sample with the camera; and removing the cartridge from the device.

The following optional features apply to all aspects of the invention.

Optionally, the analysis of the authentication code is a computer-implemented analysis.

Optionally, the analysis of the image is a computer-implemented analysis.

Optionally, the verification of the cartridge verifies its source and/or prevents cross contamination by verifying whether the cartridge is being reused.

Optionally, the biological sample is only imaged by the camera if the cartridge is verified.

Optionally, the device is configured to reject the cartridge if the authentication code is not verified.

Optionally, the authentication code is unique to the cartridge.

Optionally, the analysis of the authentication code comprises comparing the authentication code with a database of valid authentication codes.

Optionally, the mark comprises a code (such as a QR code or bar-code).

Optionally, the code is encrypted.

Optionally, the camera has a field of view, and the device is configured to receive the cartridge at an imaging location where the field of view of the camera covers all or part of the sample region and/or all or part of the machine-readable mark.

Optionally, the cartridge comprises a slide and a cover, wherein the sample region is between the slide and the cover.

Optionally, the cartridge comprises a wafer with a substantially circular outer edge.

Optionally, the machine-readable mark is outside the sample region.

Optionally, the device is portable.

Optionally, the machine-readable mark is printed or engraved on the cartridge.

Optionally the device comprises an actuation system arranged to move the cartridge relative to the camera (or vice versa) to enable the camera to obtain the multiple images of the sample region and the multiple images of the machine-readable mark.

Where the camera is moved, the motion of the camera may be a rotation and/or a translation. The whole camera may be moved, or only part of the camera (for instance a lens or other optical component).

Optionally the actuation system comprises an X-actuator arranged to generate movement in an X-direction; and a Y-actuator arranged to generate movement in a Y-direction orthogonal to the X-direction.

Optionally the actuation system comprises a rotary actuator arranged to rotate the cartridge relative to the camera.

A further aspect of the invention provides a cartridge comprising a body configured to receive a biological sample, the body comprising a pair of opposed faces which meet at an outer edge of the body; and a machine-readable mark carried by the outer edge of the body, wherein at least part of the body is optically transparent, and the machine-readable mark is configured so that it can be viewed and read through the optically transparent part of the body.

Optionally, the outer edge is substantially circular.

Optionally the machine-readable mark forms a complete circle or an arc of a circle around the outer edge of the body.

A further aspect of the invention provides a wafer comprising a body configured to receive a biological sample, the body having a substantially circular outer edge; and a machine-readable mark, wherein the machine-readable mark forms a complete circle or an arc of a circle.

Optionally the machine-readable mark has a centre of curvature at a central axis of the body of the wafer.

Optionally the machine-readable mark forms a complete circle.

Optionally the body comprising a pair of opposed faces which meet at the outer edge of the body, and the machine-readable mark is carried by the outer edge of the body.

Optionally the body comprising a pair of opposed planar faces which meet at the outer edge of the body, and the machine-readable mark is carried by one of the planar faces.

A further aspect of the invention provides apparatus for imaging a biological sample, the apparatus comprising: a wafer according to the preceding aspect configured to receive a biological sample; a camera; and a rotary actuator configured to rotate the wafer between a series of orientations, each orientation bringing a different area of the biological sample or a different area of the machine-readable mark into a field of view of the camera.

### BRIEF DESCRIPTION OF THE DRAWINGS

Embodiments of the invention will now be described with reference to the accompanying drawings, in which:
Figure 1 shows an exemplary apparatus for imaging a biological sample and verifying a cartridge;
Figure 2 shows a side view of the apparatus shown in Figure 1;
Figure 3A shows another exemplary apparatus for imaging a biological sample and verifying a cartridge;
Figure 3B shows an exemplary tray for the apparatus shown in Figure 3A with another exemplary cartridge;
Figure 4 show an exemplary cartridge;
Figure 5 show schematically an exemplary apparatus for imaging a biological sample and verifying a cartridge;
Figures 6A-6C show exemplary cartridges;
Figures 7A-7E show exemplary cartridges;
Figure 8 shows a method of verifying a cartridge;
Figure 9 shows a camera with a small field of view imaging a sample;
Figure 10 shows the camera imaging a circular wafer;
Figure 11 shows the camera imaging a sample and barcode on a slide;
Figure 12 shows an actuation system;
Figure 13 is a cross-sectional view showing a tray and wafer;
Figure 14 shows the tray carrying the wafer at an imaging location before the wafer has been engaged by a rotary actuator;
Figure 15 shows the camera imaging a barcode on the wafer; and
Figure 16 shows the camera imaging a sample on the wafer.

### DETAILED DESCRIPTION OF EMBODIMENT(S)

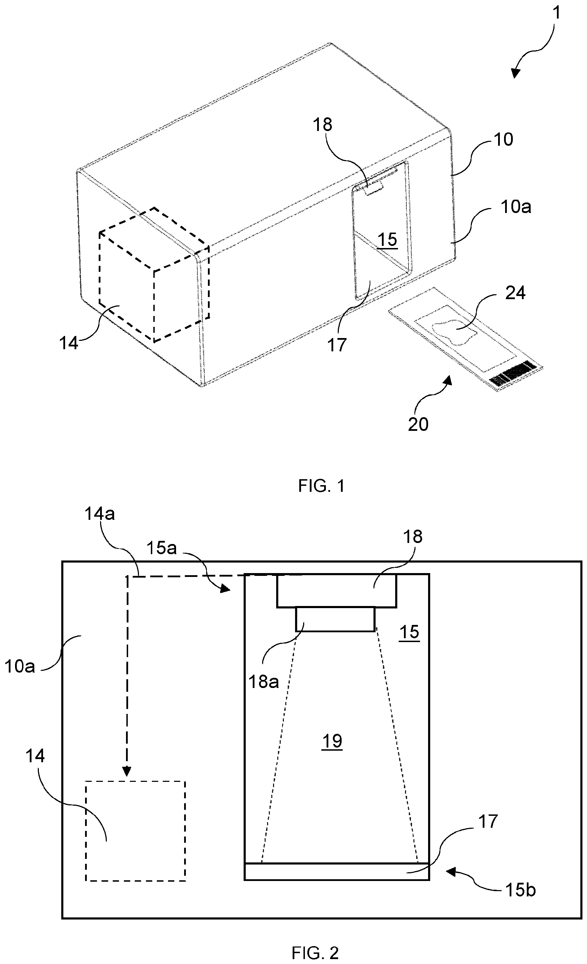

Figure 1 shows an apparatus 1 for imaging a biological sample. The apparatus 1 comprises a device 10 and a cartridge 20. Certain elements of the device 10 are shown in Figure 1, including an outer casing 10a, a computer system 14, a camera 18, a ledge 17, and an opening 15 in the side of the casing 10a.

The opening 15 is configured to receive the cartridge 20 carrying a biological sample 24. As shown more clearly in Figure 2, the opening 15 has an upper end 15a and a lower end 15b. As shown, the camera 18 is positioned at an upper end 15a of the opening 15, with a lens 18a of the camera pointing down towards the ledge 17 at the lower end 15b of the opening 15.

The camera 18 is configured to capture images within a field of view 19. As shown, the camera 18 is pointed down towards the ledge 17. The ledge 17 is configured to receive the cartridge 20. In this example, the cartridge 20 is positioned on the ledge 17 within the field of view 19 of the camera 18. The user may therefore slide the cartridge 20 onto the ledge 17 and into the field of view 19 of the camera. In other examples, the ledge 17 may include further features to help secure the cartridge 20 and/or correctly position the cartridge 20 in the opening 15. In this example, the ledge 17 is stationary in the device 10 and is not configured to move.

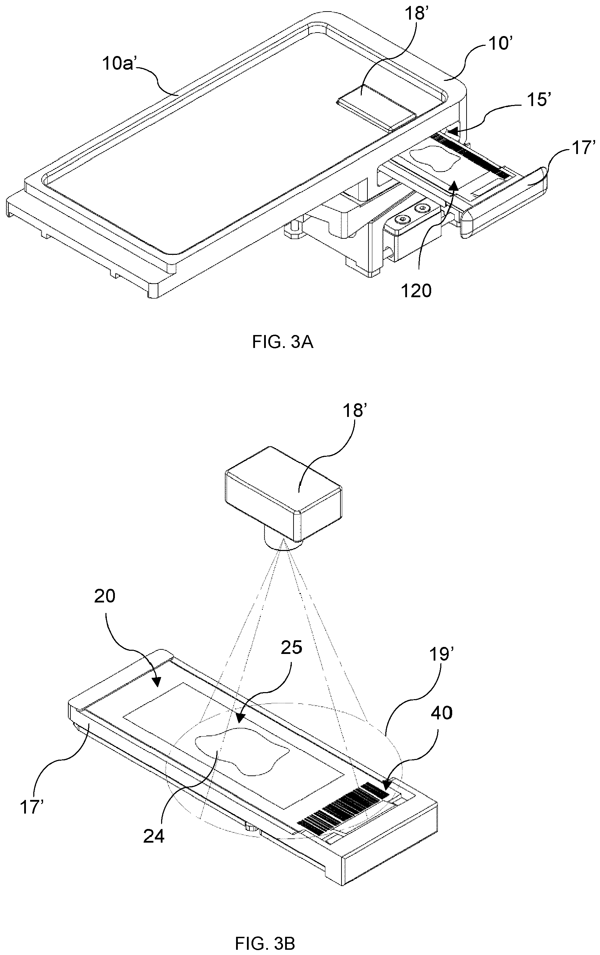

Another exemplary device 10' is shown in Figure 3A. In this example, the device 10' is smaller and hence more portable. Similar to the device 10 shown in Figure 1, the device 10' has an outer casing 10a', a camera 18' and an opening 15' in the side of a casing 10a'. In this example, a tray 17' is insertable into the opening 15'. As shown, another exemplary cartridge 120 is inserted in the tray 17'. The cartridge 120 shown in Figure 3A is similar to the cartridge 20 shown in Figure 1A with an additional '100' added to the reference numerals respectively. Figure 3B shows the tray 17' in more detail, in this case carrying the cartridge 20 rather than the cartridge 120.

The tray 17' is arranged to receive the cartridge 20, 120 in a recess. The user may insert the cartridge 20, 120 into the tray 17' before inserting the tray 17' into the opening 15' of the device 10'. The tray 17' ensures that the cartridge 20, 120 is securely held and positioned relative to the camera 18'. The device 10' may automatically translate the tray 17' so that the cartridge 20, 120 is below the camera 18', or alternatively, the user may push the tray 17' into the device 10'.

As shown more clearly in Figure 3B, the camera 18' is arranged to capture images within a field of view 19'. In the example shown in Figure 3A, the camera 18' is mounted to the device casing 10a'. In other examples, the camera 18' may form part of a smartphone (not shown) that is fitted into the casing 10a'. In this example, the smartphone may perform a validation of the cartridge 20, 120. Alternatively, the smartphone (and the camera 18') may be electronically connected to an external computer system to perform the validation of the cartridge 20, 120.

The device 10, 10' may optionally have an actuator arranged to move the cartridge 20, 120 relative to the camera 18, 18'. For example, the device 10, 10' may include an actuator to vertically translate the cartridge 20, 120 to bring it into focus with the camera lens 18a, and/or the device 10, 10' may include an actuator to rotate and/or translate the cartridge 20, 120 horizontally to bring different parts of the cartridge into the field of view 19, 19' of the camera 18, 18'. When the cartridge 20, 120 is fully inserted into the opening 15, 15' it is positioned at an imaging location with the lens 18a positioned above the cartridge 20, 120 as shown in Figure 3B.

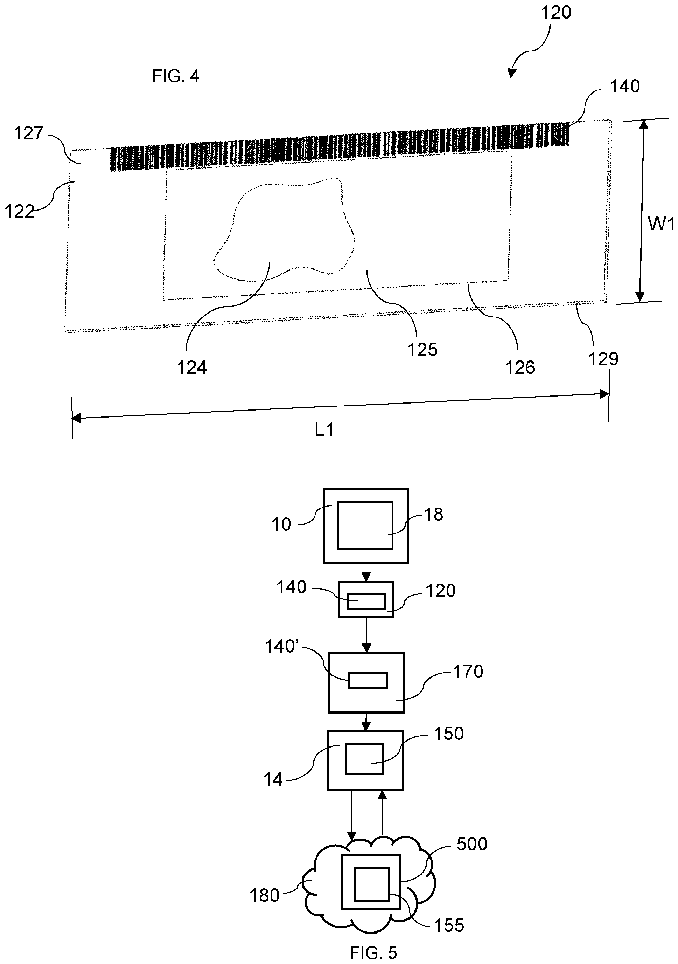

The camera 18, 18' is arranged to read the cartridge 20, 120 and produce image data. The image data acquired by the camera 18, 18' may be stored and/or analysed by the computer system 14, and/or transmitted from the device 10, 10' for remote analysis by an external computer system. The computer system 14 is electronically connected to the camera 18 (illustrated schematically by a connection 14a in Figure 2). The computer system 14 analyses the image data captured by the camera 18 to verify the cartridge, as discussed further below with reference to the cartridge 120 shown in Figure 4. However, the verification process may also be used to validate the cartridge 20 shown in Figure 1.

The cartridge 120 shown in Figure 4 carries a biological sample 124 at a sample region 125. In this example, the cartridge 120 comprises a slide 122 and an optically transparent cover slip 126, and the sample region 125 is the volume between the upper face 127 of the slide 122 and the cover slip 126.

The slide 122 has a length L1 and a width W 1. The slide 122 has an upper face 127 and an opposing lower face (not visible in Figure 4). The upper and lower faces meet at a rectangular outer edge 129.

Examples of biological samples 124 which can be loaded onto the slide 122 include: whole blood, sub-products of blood such as buffy coat, plasma, or red blood cells; fine needle biopsy samples (e.g. surgical biopsy, fine needle biopsy etc.); urine; semen; amniotic fluid; saliva; milk; bronchial lavage; cerebrospinal fluid; peritoneal fluid; faeces; bone marrow; serum; sputum; synovial fluid; tears; vaginal fluid; nasal fluid; sweat; pleural fluid; tissue explant; organ culture; or any other tissue or cell preparation, or fraction or derivative thereof or isolated therefrom. The sample 124 may be from a host organism. After the sample 124 has been loaded onto the slide 122, it is covered by the cover slip 126.

As shown in Figure 4, the slide 122 comprises a machine-readable mark 140. In the example shown in Figure 4, the machine-readable mark 140 is a barcode running along the length L1 of the slide 122. As shown, the machine-readable mark 140 is not covered by the cover slip 126, and hence it does not overlap with the sample region 125 carrying the biological sample 124. The machine-readable mark 140 is therefore provided outside the sample region 125 so that the biological sample 124 does not obscure the machine-readable mark 140.

The machine-readable mark 140 may be etched, printed, or engraved into the slide 122. Alternatively, the machine-readable mark 140 may be painted, or inked onto the slide 122.

When the cartridge 120 is fully inserted into the opening 15, 15' in the device 10, 10' the biological sample 124 and the machine-readable mark 140 are arranged to be imaged by the camera 18, 18'. The cover 126 is transparent, made from a transparent material, such as glass or acrylic material. This enables the biological sample 124 to be imaged through the cover 126.

Figure 5 shows a schematic arrangement of the device 10 and the associated components used to verify the cartridge 120. As shown, the camera 18 is mounted to the device 10. The camera 18 reads the cartridge 120 by imaging the cartridge 120 (including the machine-readable mark 140) to produce an image 170. The camera 18 may also simultaneously image the sample region 125 if the sample region 125 is in the field of view 19, 19' of the camera 18, 18'. The image 170 (containing an image 140' of the machine-readable mark 140) is communicated to the computer system 14 (or if the device 10' shown in Figure 3A is used, the image 170 is communicated to a smartphone/external computer system). The computer system 14 analyses the image 140' of the machine-readable mark 140 to obtain an authentication code 150. The authentication code 150 is unique to the cartridge 120.

The authentication code 150 may be encrypted. After decrypting the authentication code 150, the computer system 14 verifies the cartridge 120 using the decrypted authentication code 150.

The computer system 14 optionally compares the obtained authentication code 150 to a set of valid authentication codes 155. The valid authentication codes 155 may be stored in a database 500, as shown schematically in Figure 5. The database 500 of valid authentication codes 155 may be stored in a memory of the computer system 14 or, as shown schematically in Figure 5, it may be accessible to the computer system 14 through a cloud 180.

If the authentication code 150 from the machine-readable mark 140 matches one of the valid authentication codes 155 in the database 500, and has not been identified as being previously used with the device 10, then the computer system 14 verifies the cartridge 120. Verifying the cartridge 120 confirms that the cartridge 120 has been obtained from the intended manufacturer (and is therefore compatible with the device 10) and that the cartridge 120 has not been previously used to image another biological sample. Identifying the manufacturer of the cartridge 120 may be used for quality control and assurance purposes.

Once the cartridge 120 has been verified by the computer system 14, the device 10 may perform subsequent processing of the cartridge 120. For example, the device 10 may analyse the sample region 125 in the image 170 or may perform further imaging of the sample region 125. For example, the device 10 may use the lens 18a of the camera 18 to zoom in on the biological sample 124. When the device 10' shown in Figure 3A is used to image and verify the cartridge 120, the device 10' may change the position or orientation of the cartridge 120 by moving the tray 17' so that different portions of the biological sample 124 are in the field of view 19a. After the cartridge 120 has been verified by the device 10 and subsequently processed, the user may remove the cartridge 120 from the device 10.

After the cartridge 120 has been verified by the device 10, the unique authentication code 150 obtained from the cartridge 120 is removed or marked as verified on the database 500 by the computer system 14. After a cartridge 120 has been verified by the computer system 14 and the device 10 has imaged the biological sample 124, the cartridge 120 cannot be re-used to image another biological sample using the device 10 because re-using the cartridge 120 to image multiple biological samples leads to cross-contamination.

If the authentication code 150 obtained from the cartridge 120 is not verified, i.e. the obtained authentication code 150 does not match any of the authentication codes 155 in the database 500 or the authentication code 500 has been identified as being previously used, the device 10 rejects the cartridge 120. If the cartridge 120 has been rejected, the device 10 does not perform any subsequent processing (such as imaging or analysis) of the biological sample 124 in the cartridge 120. After the cartridge has been rejected by the device 10, the user may remove the cartridge 120 from the device 10.

While the example discussed in Figure 5 describes a cartridge 120 being verified using a device 10, it will be understood that the device 10' shown in Figure 3A may be used to verify the cartridge 120. Similarly, the devices 10, 10' may be used to verify the cartridge 20 shown in Figure 1.

When the cartridge 20, 120 is placed in either device 10, 10' the biological sample 24, 124 is positioned at an imaging location in the field of view 19, 19' of the camera 18, 18'. In the example shown in Figure 3B, the camera has a field of view 19' which covers all of the sample 24 and all of the machine-readable mark 40, so a single image 170 obtained by the camera 18' captures both the sample 24 and the machine-readable mark 40 simultaneously.

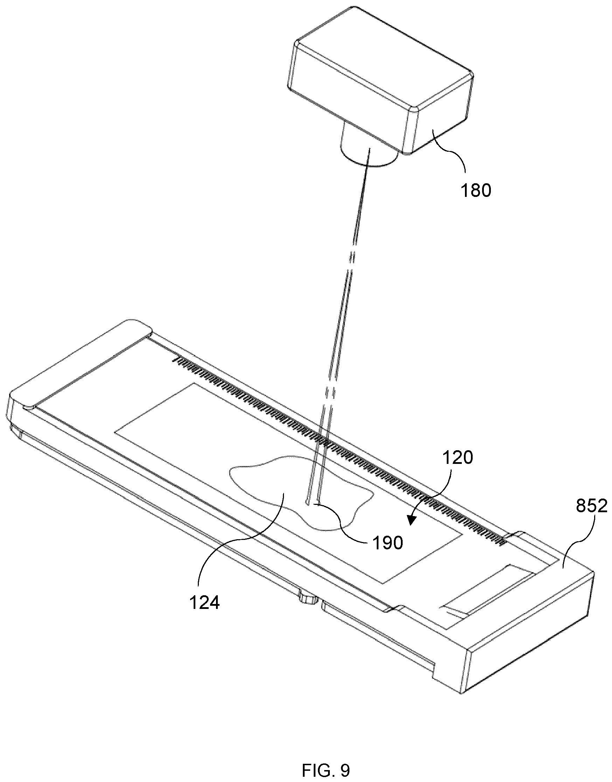

In other examples, the field of view may only cover part of the sample region 25 and/or part of the machine-readable mark 40. In this instance, the device 10, 10' may be arranged to move the cartridge 20 relative to the camera 18, 18' (or vice versa) to obtain multiple images of the sample region 25 and the machine-readable mark 40. The computer systems in the devices 10, 10' compile the obtained images to read the cartridge 20 and obtain the authentication code 150. Examples of this are described below with reference to Figures 9-16.

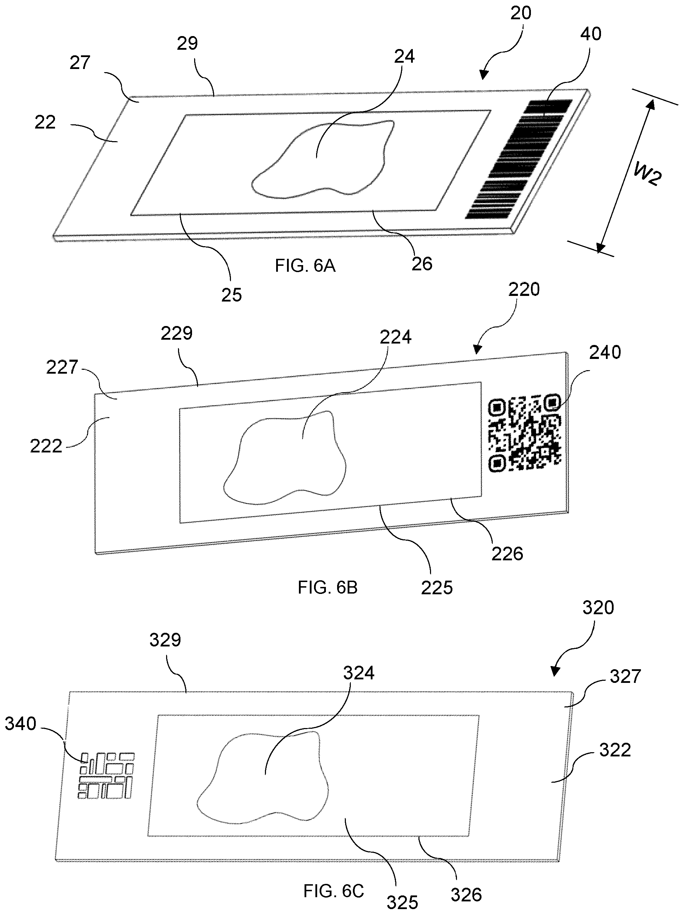

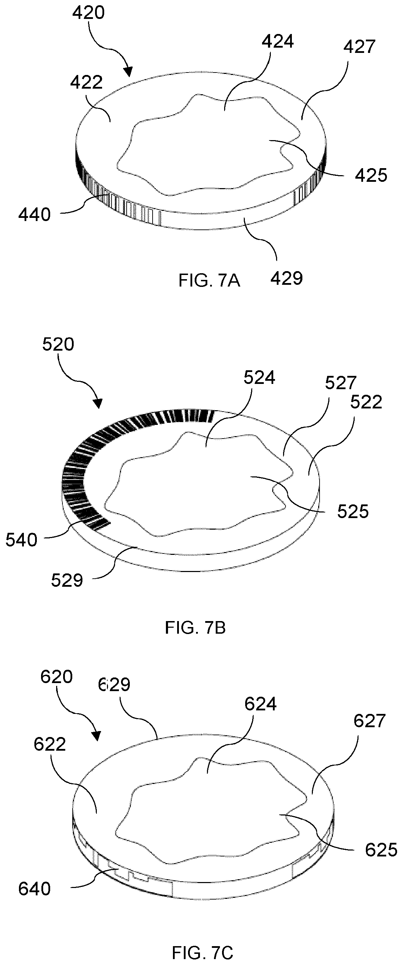

Figure 6A-6C and Figures 7A-7D shows alternative cartridges. In Figures 6B and 6C, the cartridges 220, 320 are similar to the cartridge 120 shown in Figure 4 with an additional 100 and 200 added to the reference numerals respectively. Similar features will not be described again.

Figure 6A shows the cartridge 20 in more detail, with a machine-readable mark 40. In this example, the machine-readable mark 40 is provided on the upper surface 27 of the slide 22, along the width W2 of the slide 22.

Figure 6B shows another cartridge 220 with a machine-readable mark 240. In this example, the machine-readable mark 240 is a QR code on the upper surface 227 of the slide 222. The QR code 240 is positioned adjacent to the sample region 225 of the cartridge 220 so that the biological sample 224 does not obscure the QR code.

Figure 6C shows another exemplary cartridge 320 with a machine-readable mark 340. In this example, the machine-readable mark 340 is engraved into the upper surface 327 of the slide 322.

Figures 7A-7E shows alternative exemplary cartridges that may be verified by the devices 10, 10'. Figure 7A shows a cartridge 420 comprising a body 422 (in the form of a circular wafer) configured to carry a biological sample 424 in a sample region 425.

The body 422 comprises a pair of opposed faces which meet at a circular outer edge 429 of the wafer. One of the opposed faces is an upper face 427 visible in Figure 7A. The opposite (lower) face cannot be seen in Figure 7A.

The biological sample 424 is placed on the upper face 427 of the body 422. The portion of the upper face 427 that receives the biological sample 424 forms the sample region 425. The body 422 is optically transparent (for instance, made of glass or acrylic material).

A machine-readable mark 440, in this case a barcode, is carried by the outer edge 429 of the body 422. The machine-readable mark 440 may be etched, printed, engraved, painted or inked onto the outer edge 429 of the body 422. The machine-readable mark 440 forms an arc of a circle, with a centre of curvature of the arc at the central axis of the body 422 of the wafer.

The barcode does not overlap the sample region 425 of the body 422. As the body 422 is optically transparent, the camera 18, 18' is able to image the barcode through the body 422.

Figure 7B-7D shows alternative cartridges 520, 620, 720 with circular bodies 522, 622, 722. In these examples, the bodies 522, 622, 722 are similar to the body 422 shown in Figure 7A, with an additional 100, 200, 300 added to the reference numerals respectively. The similar features will not be discussed again below.

In the example shown in Figure 7B, the body 522 comprises a machine-readable mark 540 in the form of a barcode. The barcode in this example is printed onto the planar upper face 527 of the body 522. The barcode does not overlap the biological sample 524 in the sample region 525 of the body 522.

The cartridge 520 is a wafer, the body 522 having a substantially circular outer edge. The machine-readable mark 540 forms an arc of a circle, with a centre of curvature of the arc at the central axis of the body 522 of the wafer.

The body 622 in Figure 7C has a machine-readable mark 640 etched into the circular outer edge 629 of the body 622. The mark 640 does not overlap the sample region 625 of the body 622. The machine-readable mark 640 forms an arc of a circle, with a centre of curvature of the arc at the central axis of the body 622 of the wafer.

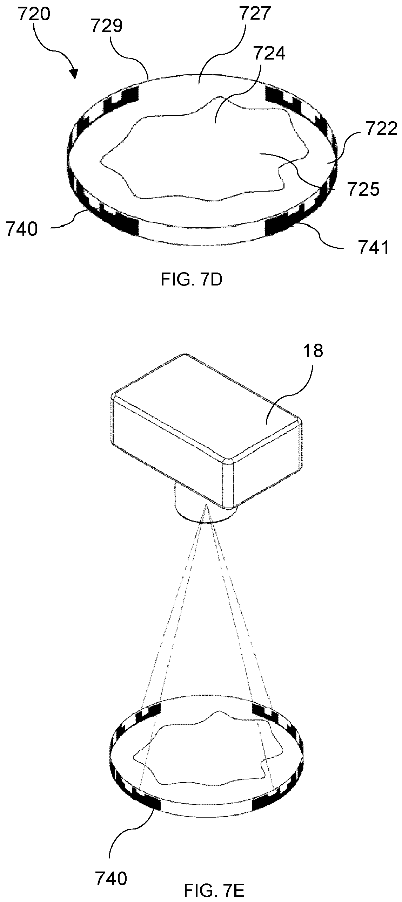

The machine-readable mark 740 of the body 722 shown in Figure 7D is printed onto the outer edge 729 of the body 722. As shown more clearly in Figure 7E, because the body 722 of the cartridge 720 is optically transparent (as are the bodies 422, 522, 622), the camera 18, 18' is able to image the machine-readable mark 740 through the upper face 727 and the interior of the body 722. This has the advantage that the upper face 727 of the body 727 can be largely dedicated to holding the biological sample 724, because the machine-readable mark 740 is not carried by the upper face 727.

In this example all of the body 722 of the cartridge 720 is optically transparent, but in other embodiments only part of the body 722 may be optically transparent (i.e. that optically transparent part providing a "window" for viewing the machine-readable mark 740 from above as shown in Figure 7E).

The machine-readable mark 740 forms an arc of a circle, with a centre of curvature of the arc at the central axis of the body 722 of the wafer. A second machine-readable mark 741 is also shown in Figure 7D, also forming an arc of a circle.

In the examples above, the body 422, 522, 622, 722 is a solid disc made of a single piece of optically transparent material, such as glass or polymer. In other examples, the body 422, 522, 622, 722 may instead comprise an assembly of two discs, with a gap between the discs that is adapted to receive the biological sample.

In this case, all or part of the upper disc may be optically transparent, with the outer edge of the upper disc carrying the machine-readable code. Since the upper disc is optically transparent, the camera 18, 18' can image the machine-readable mark through the upper disc. The lower disc may or may not be optically transparent.

In the example of Figures 7A, 7C and 7D, a machine-readable mark 440, 640, 640, 740 is carried by the outer edge of the body of a circular wafer, wherein at least part of the body is optically transparent, and the machine-readable mark 440, 640, 740 is configured so that it can be viewed and read through the optically transparent part of the body. The outer edge of the body is curved and non-planar - for example cylindrical or frustoconical. In other embodiments, a similar machine-readable mark may be carried by the outer edge of the body of a non-circular cartridge (such as the rectangular cartridges of Figueres 4 and 6A) and also read through the optically transparent part of the body.

The cartridges 420, 520, 620, 720 may be verified using either the device 10 shown in Figure 1A or the device 10' shown in Figure 3A in a similar manner as described in relation to the rectangular cartridges shown in Figures 6A to 6C.

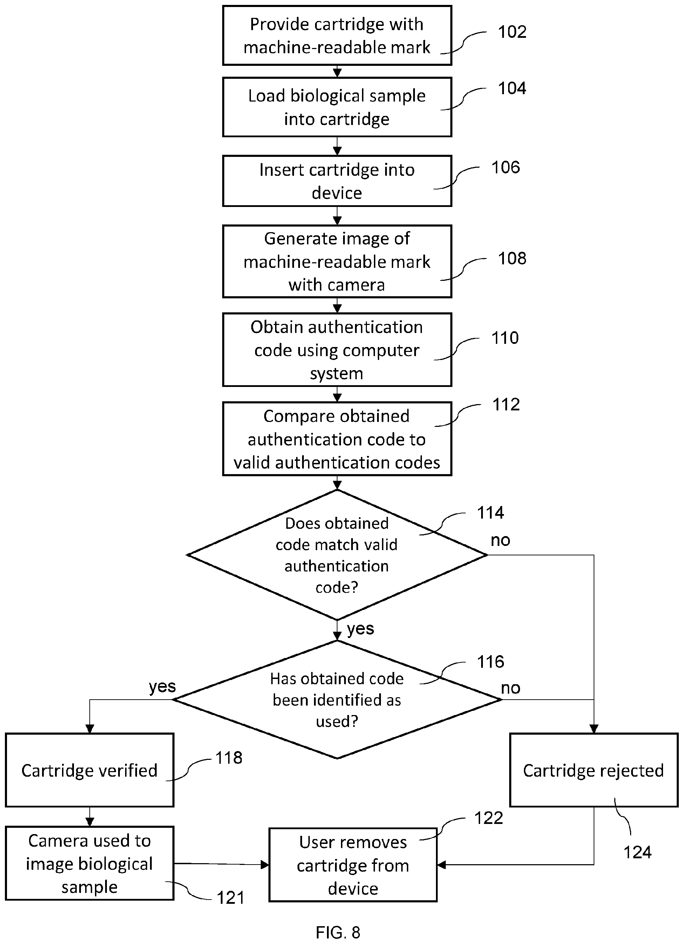

The device 10, 10' for verifying a cartridge is described above. An associated method is described below with reference to Figure 8. In step 102, a cartridge is provided with a machine-readable mark already provided on the cartridge.

At step 104, a biological sample is loaded onto the sample region of the cartridge. The cartridge is inserted into the device at step 106, before the camera generates an image of the machine-readable mark at step 108.

The computer system analyses the image of the machine-readable mark to obtain an authentication code at step 110. At step 112, the computer system compares the obtained authentication code with a database containing valid authentication codes. If the obtained authentication code matches one of the valid authentication codes in the database at step 114, the computer system moves on to step 116. If the obtained authentication code has not been previously recorded (i.e. marked as used on the database) at step 116, then the computer system proceeds to verify the cartridge at step 118.

The device then proceeds to further process the biological sample in the cartridge at step 121. In this example, the device images the biological sample at step 121. After the biological sample has been imaged and/or analysed at step 121, the user removes the cartridge from the device at step 122.

Optionally step 121 comprises analysing the image(s) of the sample, for instance to automatically classify sample features (for example red blood cells). If the post processing is performed by the device, then the device comprises a processor configured to analyse the data to automatically classify sample features.

In the event that the obtained authentication code does not match the authentication codes in the database at step 114 or if the cartridge has been identified on the database as being previously imaged at step 116, the computer system rejects the cartridge at step 124. As shown, the device does not perform any further processing of the biological sample in the cartridge. The user may then remove the rejected cartridge from the device at step 122.

An advantage of the method of Figure 8 is that only a single camera is required by the device to image both the machine-readable mark and the sample region. This "dual use" of the camera results in a more compact (and hence more portable) device.

Figures 9-11 show a camera 180 with a field of view which can only cover part of the sample region or part of the machine-readable mark.

Figure 9 is an example with the cartridge 120 of Figure 4 carrying a biological sample 124. In this case the field of view 190 is shown falling on the biological sample 124.

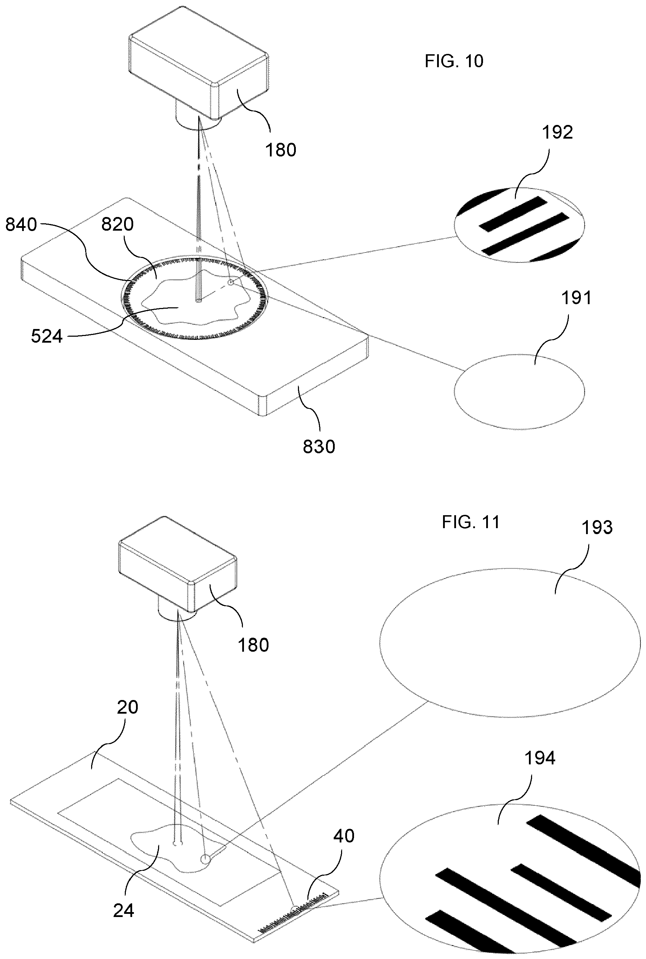

Figure 10 is an example with a circular cartridge in the form of a wafer 820, similar to the wafer 520 of Figure 7B, carrying a biological sample 524. In this case the field of view is shown in different positions including a position 191 falling on the biological sample 524 and a position 192 falling on the machine-readable mark 840. Enlarged depiction of the fields of view 191, 192 are included in Figure 10. The field of view 192 contains part of the machine-readable mark 840 (the rest of the machine-readable mark 840 falling outside the field of view 192) and the field of view 191 contains part of the biological sample 524 (the rest of the sample 524 falling outside the field of view 191).

The camera 180 obtains an image containing the part of the machine-readable mark 840 in the field of view 192, and a separate image containing the part of the biological sample 124 in the field of view 191. The camera obtains multiple images of the sample region and multiple images of the machine-readable mark 840 in this way. Each image of the machine-readable mark 840 contains a different part of the machine-readable mark 840 and each image of the biological sample 524 contains a different part of the biological sample 524.

Figure 11 is an example with the cartridge 20 of Figure 6A carrying a biological sample 24. In this case the field of view is shown in different positions including a position 193 falling on the biological sample 24 and a position 194 falling on the machine-readable mark 40. Enlarged depiction of the fields of view 193, 194 are included in Figure 11. The field of view 194 contains part of the machine-readable mark 40 and the field of view 193 contains part of the biological sample 24.

The camera 180 obtains an image containing the part of the machine-readable mark 40 in the field of view 194, and a separate image containing the part of the biological sample 24 in the field of view 193. The camera obtains multiple images of the sample region and multiple images of the machine-readable mark 40. Each image of the machine-readable mark contains a different part of the machine-readable mark 40 and each image of the biological sample contains a different part of the biological sample 24.

Optionally the device comprises an actuation system arranged to move the cartridge 20, 120, 820 relative to the camera 180 (or vice versa) to enable the camera 180 to obtain the multiple images of the sample region and the multiple images of the machine-readable mark. In other embodiments, the cartridge may be manually moved relative to the camera to obtain the multiple images. For example in the case of the cartridge 120 of Figure 4, multiple images of the machine-readable mark 140 running along the long edge of the cartridge may be obtained as the cartridge is manually pushed into the device.

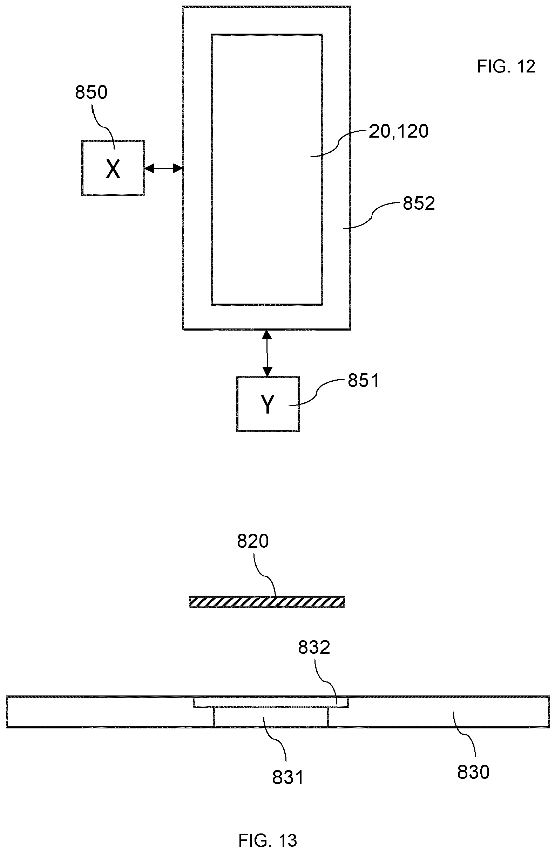

Figure 12 gives an example of a suitable actuation system of the device, configured to move the rectangular cartridges 20, 120. The actuation system comprises an X-actuator 850 arranged to generate linear movement in an X-direction; and a Y-actuator 851 arranged to generate linear movement in a Y-direction orthogonal to the X-direction. The rectangular cartridge 20, 120 is carried by a tray 852, also shown in Figure 9, which is driven by the X and Y-actuators.

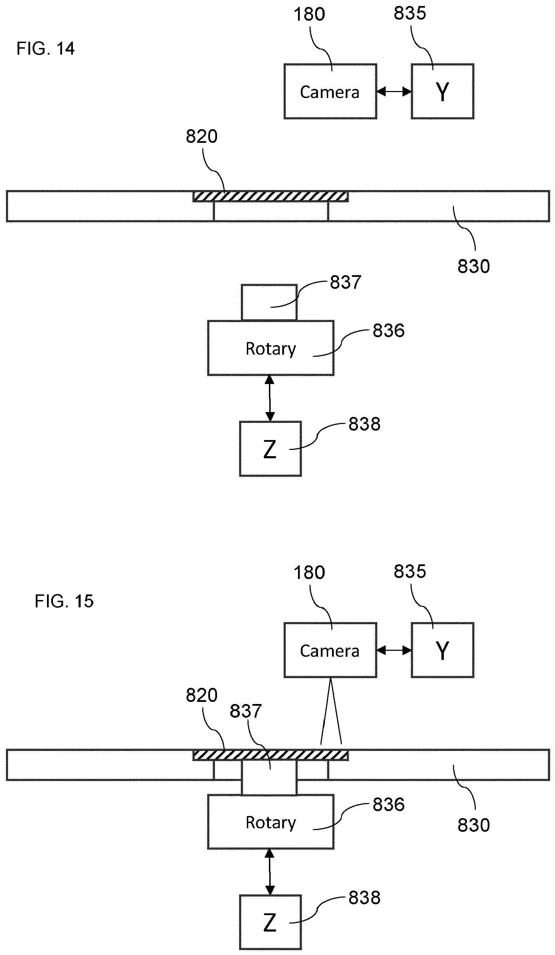

The circular wafer 820 is carried by a tray 830 shown in Figures 10 and 13. The tray 830 has a though hole 831 with an annular ledge 832. The circular wafer 820 is dropped onto the ledge 832 then the tray is inserted into the device with the wafer 820 below the camera 180 as shown in Figure 14

Figures 14 and 15 show an example of a suitable actuation system for moving the circular wafer 820.

The device has a Y-actuator 835 arranged to translate the camera 180 in the Y-direction (left/right in Figure 14). A rotary actuator 836 with a drive shaft 837 is driven upwardly by a Z-actuator 838 so that the drive shaft 837 contacts the underside of the wafer 820 as shown in Figure 15.

In Figure 15 the field of view of the camera 180 falls on the machine-readable mark. With the camera in the position of Figure 15, the rotary actuator 15 rotates the wafer 820 about its central axis between a series of orientations, each orientation bringing a different area of the machine-readable mark 840 into the field of view of the camera. The camera obtains multiple images of the machine-readable mark 840, each image associated with a respect orientation of the wafer 820.

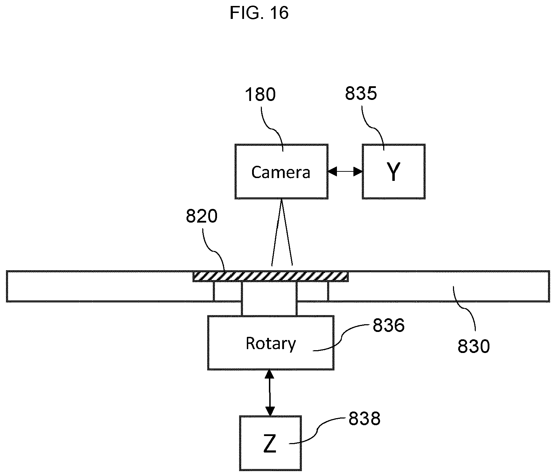

Then the Y-actuator 835 translates the camera 180 in the Y-direction so that the field of view of the camera falls on the biological sample as shown in Figure 16. With the camera in the position of Figure 16, the rotary actuator 836 rotates the wafer 820 about its central axis between a series of orientations, each orientation bringing a different area of the biological sample 524 into the field of view of the camera 180. The camera 180 obtains multiple images of the biological sample 524, each image associated with a respective different orientation of the wafer 820.

In the example of Figure 10, the machine-readable mark 840 forms a complete circle around the sample region, with a centre of curvature of the complete circle at the central axis of the wafer 820. A machine-readable mark which forms a complete circle in this way is advantageous in that it is "endless" so the scanning process for reading the machine-readable mark 840 can start at any point.

In the embodiments of Figures 7A-7E, the machine readable mark 440, 540, 640, 740 form an arc of a circle, which is not a complete circle but also has a centre of curvature at the central axis of the wafer. This retains the advantage of a circular mark, in that the mark can be scanned easily by rotating the wafer about the central axis of the wafer.

In the case of Figures 7A, 7C and 7D the machine-readable mark 440, 640, 740 is carried by the outer edge of the body and in the case of Figure 7B and Figure 10 the machine-readable mark 540, 840 is carried by one of the opposed planar faces of the wafer.

The devices described above may be arranged to provide a scanning motion, moving the cartridge relative to the camera (or vice versa) to enable the camera to obtain multiple images of the sample region (each image containing a different part of the sample region) and multiple images of the machine-readable mark (each image containing a different part of the machine-readable mark).

This scanning motion may be achieved in a number of different ways. In some embodiments of the invention (for instance Figure 12 and Figure 15) the device is arranged to move the cartridge 20, 120, 820 to obtain the multiple images of the sample region and the multiple images of the machine-readable mark, the camera 180 remaining stationary as the cartridge moves. In other embodiments of the invention, the device may be arranged to move the camera 180 (by a rotation and/or translation of all or part of the camera) to obtain the multiple images of the sample region and the multiple images of the machine-readable mark, the cartridge remaining stationary as the camera moves. In other embodiments of the invention, the device may be arranged to move the camera and the cartridge, either simultaneously or at different times, to provide the scanning motion which enables the multiple images to be obtained. In other embodiments of the invention, some or all of the motion may be achieved manually.

As noted above, the computer systems 14 in the devices 10, 10' compile the obtained images of the machine-readable mark to read the cartridge and obtain the authentication code. In one embodiment this may be achieved as follows. The actuation system 850, 851 drives the cartridge in a stepwise fashion between a series of imaging locations. At each location, a snapshot of the field of view is taken by the camera 180. The snapshots may be overlapping or non-overlapping. Since the precise coordinates of each snapshot is known, the images can be stitched or otherwise compiled together to form a composite image of the machine-readable mark, which can then be analysed by the computer system 14 to obtain the authentication code. A composite image of all or part of the biological sample could optionally be obtained in a similar way by compiling multiple images of the sample region.

In the embodiments of Figures 9-11, the field of view of the camera 180 only covers part of the sample region or part of the machine-readable mark. The camera 180 obtains multiple images of the sample region (each image containing a different part of the sample region) and multiple images of the machine-readable mark (each image containing a different part of the machine-readable mark). The small field of view is advantageous in that it enables the images to be at a higher resolution than if the field of view covered the whole cartridge, and/or it enables a smaller or cheaper camera 180 to be used.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. Apparatus for imaging a biological sample, the apparatus comprising:
a cartridge comprising a machine-readable mark, and a sample region configured to receive a biological sample; and
a device configured to receive the cartridge, the device comprising a camera configured to read the cartridge by imaging the machine-readable mark and imaging the sample region, wherein the camera has a field of view which can only cover part of the sample region or part of the machine-readable mark;
wherein the cartridge can be removed from the device after it has been read by the camera, and the device is arranged to move the cartridge relative to the camera (or vice versa) to enable the camera to obtain multiple images of the sample region and multiple images of the machine-readable mark.

2. Apparatus according to claim 1, wherein the device further comprises a computer system configured to analyse the multiple images of the machine-readable mark to obtain an authentication code, and further configured to verify the cartridge by an analysis of the authentication code.

3. Apparatus according to claim 2, wherein the device is configured to reject the cartridge if the authentication code is not verified.

4. Apparatus according to claim 2 or 3, wherein the authentication code is unique to the cartridge.

5. Apparatus according to any one of claims 2 to 4, wherein the analysis of the authentication code comprises comparing the authentication code with a database of valid authentication codes.

6. Apparatus according to any preceding claim, wherein the mark comprises a code.

7. Apparatus according to claim 6, wherein the code is encrypted.

8. Apparatus according to any preceding claim, wherein the device is configured to the receive the cartridge at an imaging location where the field of view of the camera covers part of the sample region and/or part of the machine-readable mark.

9. Apparatus according to any preceding claim, wherein the cartridge comprises a body with a substantially circular outer edge.

10. Apparatus according to claim 9, wherein the machine-readable mark forms a complete circle or an arc of a circle.

11. Apparatus according to any preceding claim, wherein the device comprises an actuation system arranged to move the cartridge relative to the camera (or vice versa) to enable the camera to obtain the multiple images of the sample region and the multiple images of the machine-readable mark.

12. Apparatus according to claim 11, wherein the actuation system comprises a rotary actuator configured to rotate the wafer between a series of orientations, each orientation bringing a different area of the biological sample or a different area of the machine-readable mark into a field of view of the camera.

13. A method of imaging a biological sample, the method comprising: loading a biological sample onto or into a sample region of a cartridge; loading the cartridge onto or into a device, the device comprising a camera; moving the cartridge relative to the camera (or vice versa) to enable the camera to obtain multiple images of the sample region and multiple images of the machine-readable mark, each image of the machine-readable mark containing only part of the machine-readable mark and each image of the biological sample containing only part of the biological sample; and removing the cartridge from the device.

14. A method according to claim 13, further comprising compiling the multiple images of the machine-readable mark to read the machine-readable mark.

15. A method according to claim 13 or 14, further comprising compiling the multiple images of the sample region to obtain a composite image of all or part of the biological sample.
